# EUROPÄISCHE PATENTSCHRIFT

(11) **EP 2 115 395 B1**
(45) Veröffentlichungstag und Bekanntmachung des Hinweises auf die Patenterteilung: **19.08.2015**
(21) Anmeldenummer: 08707388.8
(22) Anmeldetag: 30.01.2008
(51) Int. Cl.: G01D 5/20

(54) **BEDIENVORRICHTUNG MIT EINER GEBERANORDNUNG UND EINER EMPFANGSANORDNUNG**
OPERATING DEVICE WITH A TRANSMITTER ARRANGEMENT AND A RECEIVER ARRANGEMENT
DISPOSITIF DE COMMANDE POURVU D'UN ENSEMBLE ÉMETTEUR ET D'UN ENSEMBLE RÉCEPTEUR

(30) Priorität: 07.03.2007 DE 102007011065
(43) Veröffentlichungstag der Anmeldung: 11.11.2009
(73) Patentinhaber: paragon AG, 33129 Delbrück (DE)
(72) Erfinder: MÖNKEMÖLLER, Ralf, 33335 Gütersloh (DE)
(74) Vertreter: Lelgemann, Karl-Heinz
(86) Internationale Anmeldenummer: PCT/EP2008/000687
(87) Internationale Veröffentlichungsnummer: WO 2008/107048

(56) Entgegenhaltungen:
- US-A- 6 059 660
- US-A1- 2004 058 730

## Beschreibung

Die Erfindung bezieht sich auf eine Bedienvorrichtung mit einer Geberanordnung und einer Empfangsanordnung, zu der die Geberanordnung längs-, quer- und vertikalbewegbar ist und mittels der in Abhängigkeit von der jeweiligen Position der Geberanordnung unterschiedliche Signale erzeugbar sind.

Aus der DE 102 11 392 A1 ist eine Bedienvorrichtung bekannt, bei der mittels eines Verstellhebels und einer damit zusammen wirkenden Sensorik eine Position bzw. Auswahl vorgegeben werden kann. Die Sensorik besteht aus einer Geberspule, die an einem Ende des Hebels angeordnet ist. Unter dem Hebel ist eine beliebig gestaltbare Spulenanordnung aus Empfangsspulen als Antennenmatrix aufgespannt.

Aufgrund der magnetischen Kopplung induziert die Geberspule in den Empfangsspulen ein Signal.

Bei vergleichbaren aus dem Stand der Technik bekannten Bedienvorrichtungen, die z.B. nach dem Transponderprinzip arbeiten, wird eine Spannung induziert und ein Signal zurückgesendet. Bei Bedienvorrichtungen, die nach einem weiteren Prinzip arbeiten, werden die die Antennenmatrix bildenden Spulen von einem Strom durchflossen und lediglich die durch die elektromagnetische Ankopplung der Geberspule verursachten Stromflussänderungen ausgewertet. Des Weiteren sind Bedienvorrichtungen bekannt, bei denen statt der Geberspule magnetische Dämpfungsmaterialien eingesetzt werden, die wiederum durch die magnetische Ankopplung Veränderungen in den Empfangsspulen hervorrufen. Noch andere Bedienvorrichtungen setzen statt der Geberspule Magnete ein, deren Position wiederum durch Magnetfeldsensoren, z.B. Hall Sensoren, erfasst wird.

Sofern ein entsprechender Bedarf auftritt, werden derartige bekannte Bedienvorrichtungen mit weiteren Eingabemöglichkeiten versehen, wodurch zugehörige Funktionen ausgelöst werden können. So kann beispielsweise in eine derartige Bedienvorrichtung ein elektromechanischer Schalter integriert werden, über den z.B. Getriebeschaltprogramme umgeschaltet oder ausgewählt werden können. Diese zusätzlichen Eingabemöglichkeiten verteuern derartige bekannte Bedienvorrichtungen erheblich, da der elektromechanische Schalter eingebaut und.über eine Kabelverbindung mit einem Steuergerät verbunden werden muss. Das Dokument D1, US 6 059 660 A, offenbart eine Bedienvorrichtung mit zwei separaten Geber (5,6,26)/Empfangsvorrichtungen (7,24) um eine zusätzliche Eingabemöglichkeit zu ermöglichen.

Der Erfindung liegt die Aufgabe zugrunde, eine Bedienvorrichtung der zu schaffen, bei der eine zusätzliche Funktionalität in eine vorhandene Bedienvorrichtung mit einem im Vergleich zum Stand der Technik erheblich geringeren technisch-konstruktiven und wirtschaftlichen Aufwand zu integrierten.

Diese Aufgabe wird erfindungsgemäß dadurch gelöst, dass die Geberanordnung der Bedienvorrichtung in Bezug auf deren Empfangsanordnung verdrehbar und so ausgestaltet ist, dass mittels ihr in unterschiedlichen Drehwinkeln unterschiedliche, dem jeweiligen Drehwinkel zugeordnete Signale in der Empfangsanordnung erzeugbar sind. Erfindungsgemäß wird die mit einem in X-, Y- und Z-Richtung verstellbaren Verstellhebel ausgestaltete Bedienvorrichtung so modifiziert, dass auch eine Drehung des Verstellhebels erfassbar ist. Für den Verstellhebel ist somit nicht nur dessen X-, Y- und Z-Position erfassbar, sondern auch seine Drehwinkelposition. Durch Drehen des Verstellhebels können somit Funktionen ausgelöst oder gewählt werden, z.B. ein Schaltprogramm, eine Lautstärke, Fernlicht oder ähnliches.

Bei der erfindungsgemäßen Bedienvorrichtung weist deren Geberanordnung ein Geberelement mit einer Geometrie auf, die in Abhängigkeit vom Drehwinkel unterschiedliche Signale in der Empfangsanordnung bewirkt.

Alternativ kann die Geberanordnung zumindest zwei voneinander unabhängige Geberelemente aufweisen, deren Drehwinkelpositionen separat erfassbar sind, so dass aus den separat erfassten Drehwinkelpositionen der einzelnen Geberelemente der Drehwinkel der Geberanordnung ermittelt werden kann.

Das Geberelement bzw. die Geberelemente können als Geberspule bzw. Geberspulen, Gebermagnet bzw. Gebermagnete oder magnetisches Dämpfungsteil bzw. magnetische Dämpfungsteile und die Empfangsanordnung kann als Spulenanordnung bzw. Magnetfeldsensoranordnung ausgebildet sein.

Zweckmäßigerweise ist die Geberanordnung an einem Endabschnitt eines Verstellhebels angeordnet, wobei der Verstellhebel und mit ihm die Geberanordnung in Bezug auf die unterhalb des Verstellhebels bzw. unterhalb der Geberanordnung angeordnete Empfangsanordnung bewegbar ist.

In einer vergleichsweise robusten und technisch-konstruktiv wenig aufwendigen Ausführungsform ist das die Geberanordnung ausbildende Geberelement als nicht mittelpunktsymmetrische, z.B. als länglich ovale, Geberspule ausgestaltet, deren Längsabmessung so bemessen ist, dass sie zumindest zwei Empfangsspulen der Empfangsanordnung überlappt.

Eine höhere Auflösung ist erreichbar, wenn die Geberanordnung eine er ste Geberspule, einen ersten Gebermagneten bzw. ein erstes Dämpfungsteil, die, der bzw. das zentral am Verstellhebel angeordnet ist und mittels der bzw. dem die Position der Geberanordnung erfassbar ist, und eine zweite Geberspule, einen zweiten Gebermagneten bzw. ein zweites Dämpfungsteil aufweist, die, der bzw. das versetzt in Bezug auf die erste Geberspule, den ersten Gebermagneten bzw. das erste Dämpfungsteil angeordnet und deren bzw. dessen Position mittels der Spulenanordnung bzw. der Magnetfeldsensoranordnung separat erfassbar ist.

Im Folgenden wird die Erfindung anhand von Ausführungsformen unter Bezugnahme auf die Zeichnung näher erläutert.

Es zeigen:
- Figur 1: eine Prinzipdarstellung einer Geber- und einer Empfangsanordnung einer ersten Ausführungsform einer erfindungsgemäßen Bedienvorrichtung;
- Figur 2: die Geber- und Empfangsanordnung der in Figur 1 gezeigten Ausführungsform der erfindungsgemäßen Bedienvorrichtung, wobei die Drehposition der Geberanordnung verändert ist;
- Figur 3: die Geber- und Empfangsanordnung einer zweiten Ausführungsform der erfindungsgemäßen Bedienvorrichtung;
- Figur 4: die Geber- und Empfangsanordnung der in Figur 3 gezeigten Ausführungsform der erfindungsgemäßen Bedienvorrichtung, wobei die Drehstellung der Geberanordnung verändert ist; und
- Figur 5: einen Verstellhebel der zweiten Ausführungsform der erfindungsgemäßen Bedienvorrichtung mit der an einem Ende angeordneten Geberanordnung.

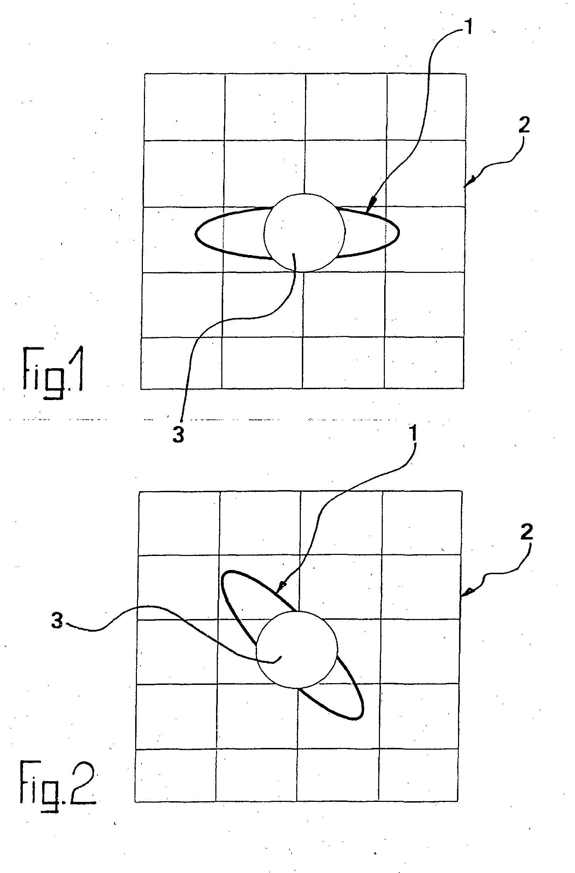

Eine anhand der Figuren 1 und 2 gezeigte erste Ausführungsform einer erfindungsgemäßen Bedienvorrichtung hat eine Geberanordnung 1 und eine Empfangsanordnung 2.

Im in den Figuren 1 und 2 gezeigten Ausführungsbeispiel ist die Geberanordnung 1 an einem einem in den Figuren 1 und 2 nicht gezeigten Betätigungsabschnitt entgegengesetzten Endabschnitt 3 eines Verstellhebels angebracht und als Geberspule ausgebildet. Anstelle als Geberspule könnte die Geberanordnung 1 auch als Gebermagnet oder als magnetisches Dämpfungsteil ausgestaltet sein.

Die Empfangsanordnung 2 kann in beliebiger Weise als Antennenmatrix ausgestaltet sein. Zum Beispiel kann als Empfangsanordnung 2 eine Spulenanordnung oder eine Magnetfeldsensoranordnung dienen.

In den in den Figuren 1 bis 5 gezeigten Ausführungsformen der erfindungsgemäßen Bedienvorrichtung ist die als Antennenmatrix aufgespannte Empfangsanordnung 2 als Spulenanordnung ausgebildet.

Die Geberspule 1 bildet mit der Spulenanordnung 2 die Sensorik der Bedienvorrichtung. Die Geberspule 1 wird mit einem Wechselstrom beaufschlagt, der von einer Oszillatorschaltung erzeugt und der Geberspule 1 über eine elektrische Verbindungsleitung zugeführt wird.

Die Geberspule 1 ist mittels des lediglich durch seinen die Geberspule 1 aufnehmenden Endabschnitt 3 dargestellten Verstellhebels längs-, quer- und vertikalbewegbar in Bezug auf die Spulenanordnung 2 und ist des Weiteren drehbar, wie sich aus einer Zusammenschau der Figuren 1 und 2 ergibt. Während die Geberspule 1 sich in Figur 1 in einer Position befindet, in der ihr größter Durchmesser etwa waagerecht verläuft, befindet sich die Geberspule 1 in Figur 2 in einer verdrehten Position, in der ihr längster Durchmesser etwa in einem Winkel von 45 Grad zu der in Figur 1 gezeigten Orientierung des längsten Durchmessers verläuft.

Der die Geberspule 1 durchfließende Wechselstrom induziert aufgrund der magnetischen Kopplung in der Empfangs- bzw. Spulenanordnung 2 einen Wechselstrom mit derselben Frequenz.

Um in unterschiedlichen Drehstellungen des Verstellhebels bzw. der Geberspule 1 unterschiedliche von der als Antennenmatrix fungierenden Spulenanordnung 2 zu erhalten, ist die Geberspule 1 asymmetrisch in Bezug auf den Endabschnitt 3 des Verstellhebels und damit eine Drehachse 4 desselben angeordnet. Wie sich aus den Figuren 1 und 2 ergibt, ist die Geberspule 1 in Bezug auf den Endabschnitt 3 so angeordnet, dass sie in Figur 1 rechts weiter über den Endabschnitt 3 des Verstellhebels vorsteht als nach links. Hierdurch werden die in der Spulenanordnung erzeugten Signale abhängig davon, in welcher Drehposition sich der lediglich anhand seines Endabschnitts 3 dargestellte Verstellhebel befindet.

Entsprechend kann durch Drehen des Verstellhebels der Bedienvorrichtung eine bisher mittels der Bedienvorrichtung nicht realisierbare Funktion ausgelöst werden, z.B. ein Schaltprogramm, Lautstärkenveränderungen, Fernlichteinschaltung oder ähnliches.

Erreicht wird diese zusätzliche Funktionalität der Bedienvorrichtung, indem die Geberspule 1, die am Verstellhebel bzw. an dessen Endabschnitt 3 angebracht ist, asymmetrisch, z.B. länglich oval, ausgebildet ist, wobei eine geringfügig exzentrische Anordnung der Geberspule 1 gewählt wird. Die Abmessungen der Geberspule 1 sind so gewählt, dass in jeder Drehstellung der Geberspule 1 und damit des Verstellhebels mehr als eine Empfangsspule der Spulenanordnung 2 überlappt wird. Durch die Auswertung der in der in X-Richtung verlaufenden Antennenmatrix und der in Y-Richtung verlaufenden Antennenmatrix induzierten Signalspannungen kann die Orientierung bzw. der Drehwinkel der Geberspule 1 berechnet werden. Hierdurch steht die weitere Funktionalität der Bedienvorrichtung zur Verfügung.

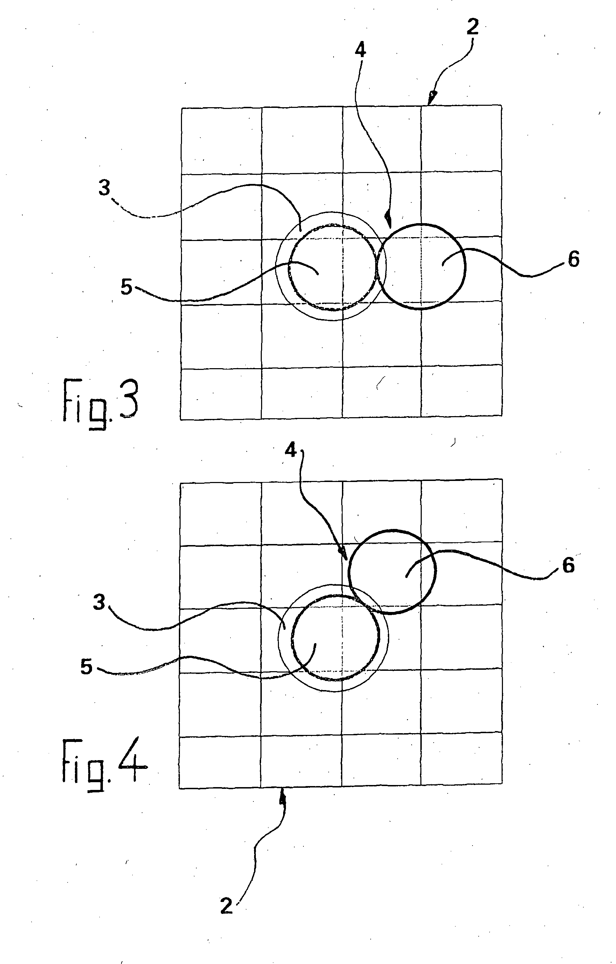

Im Falle der in den Figuren 3 und 4 gezeigten Ausführungsform der erfindungsgemäßen Bedienvorrichtung ist eine Geberanordnung 4 vorgesehen, die im gezeigten Ausführungsbeispiel aus einer ersten Geberspule 5 und einer zweiten Geberspule 6 besteht. Die erste Geberspule 5 ist in Bezug auf den Endabschnitt 3 des Verstellhebels mittig angeordnet. Die zweite Geberspule 6 ist neben der ersten Geberspule 5 versetzt zum Endabschnitt 3 des Verstellhebels angeordnet, wie aus den Figuren 3 und 4 hervorgeht. In jeder Drehstellung des Verstellhebels bzw. der Geberanordnung 4 ist letztere in Bezug auf die Empfangsanordnung 2 anders orientiert, so dass in jeder Drehstellung der Geberanordnung 4 das durch sie in der Empfangsanordnung 2 erzeugte Signal unterschiedlich ist. Mit der anhand der Figuren 3 und 4 gezeigten Geberanordnung 4 mit erster 5 und zweiter Geberspule 6 lässt sich eine bessere Auflösung im Vergleich zu dem anhand der Figuren 1 und 2 beschriebenen Ausführungsbeispiel erzielen.

Mit der ersten, mittig angeordneten Geberspule 5 wird eine zentrale Position des Verstellhebels bzw. dessen Endabschnitts 3 erfasst. Die versetzt zur ersten Geberspule 5 angeordnete zweite Geberspule 6 der Geberanordnung 4 wird hinsichtlich ihrer Position separat erfasst.

Die zweite Geberspule 6 kann z.B. mit einer unabhängigen elektrischen Verbindungsleitung versehen sein. Der seitens der Oszillatorschaltung erzeugte Wechselstrom wird wechselweise auf die erste Geberspule 5, um deren Position zu erfassen, und dann auf die zweite Geberspule 6 gegeben, um deren Position zu erfassen. Aus den erfassten Positionen der beiden Geberspulen 5, 6 sowie über einfache Winkelberechnungen ist ohne weiteres der am Verstellhebel eingestellte Drehwinkel errechenbar. Aufgrund der derart erfassbaren Drehposition des Verstellhebels lässt sich - wie vorstehend bereits erwähnt-die zusätzliche Funktionalität der Bedienvorrichtung realisieren. Durch ähnliche geometrische Ausgestaltungen der Geberanordnungen sind auch Bedienvorrichtungen realisierbar, die konventionell, z.B. mit Magnetfeldsensor und Magnet oder Spulen und Dämpfungselement funktionieren.

Statt der beiden Geberspulen 5, 6 werden zwei Magnete oder zwei Dämpfungselemente versetzt zueinander in Bezug auf den Verstellhebel angeordnet. Durch eine entsprechende Positionierung der Magnetfeldsensoren oder Detektionsspulen können dann die Positionen der einzelnen Geberelemente der Geberanordnung separat erfasst und der Drehwinkel erkannt oder berechnet werden.

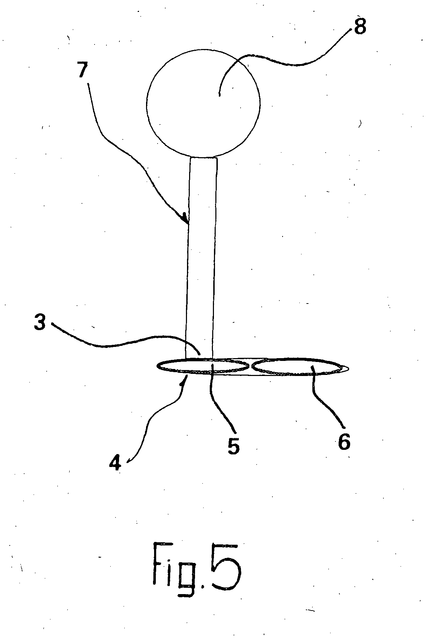

Ein in Figur 5 gezeigter Verstellhebel 7 ist an seinem seinem Betätigungsabschnitt 8 entgegengesetzten Endabschnitt 3 mit der Geberanordnung 4 versehen, wobei die mittige Anordnung der ersten Geberspule 5 und die dazu versetzte Anordnung der zweiten Geberspule 6 ersichtlich ist.

## Patentansprüche

1. Bedienvorrichtung mit einer Geberanordnung (1) und einer Empfangsanordnung (2), zu der die Geberanordnung (1) längs-, quer- und vertikalbewegbar ist und mittels der in Abhängigkeit von der jeweiligen Position der Geberanordnung (1) unterschiedliche Signale erzeugbar sind, **dadurch gekennzeichnet, dass** die Geberanordnung (1) in Bezug auf die Empfangsanordnung (2) verdrehbar und so gestaltet ist, dass mittels ihr in unterschiedlichen Drehwinkeln unterschiedliche, dem jeweiligen Drehwinkel zugeordnete Signale in der Empfangsanordnung (2) erzeugbar sind, und dass das die Geberanordnung (1) ausbildende Geberelement als nicht mittelpunktsymmetrische, z.B. als länglich ovale, Geberspule (1) ausgestaltet ist, deren Längsabmessung so bemessen ist, dass sie zumindest zwei Empfangsspulen der Empfangsspulenanordnung (2) überlappt.

2. Bedienvorrichtung mit einer Geberanordnung (4) und einer Empfangsanordnung (2), zu der die Geberanordnung (4) längs-, quer- und vertikalbeweglich ist und mittels der in Abhängigkeit von der jeweiligen Position der Gebernordnung (4) unterschiedliche Signale erzeügbar sind, **dadurch gekennzeichnet, dass** die Geberanordnung (4) in Bezug auf die Empfangsanordnung (2) verdrehbar und so gestaltet ist, dass mittels ihr in unterschiedlichen Drehwinkeln unterschiedliche, dem jeweiligen Drehwinkel zugeordnete Signale in der Empfangsanordnung (2) erzeugbar sind, und dass die Geberanordnung (4) eine erste Geberspule (5), einen ersten Gebermagneten bzw. ein erstes Dämpfungsteil, die, der bzw. das zentral am Verstellhebel (7) angeordnet ist und mittels der bzw. dem die Position der Geberanordnung (4) erfassbar ist, und eine zweite Geberspule (6), einen zweiten Gebermagneten bzw. ein zweites Dämpfungsteil aufweist, die, der bzw. das versetzt in Bezug auf die erste Geberspule (5), den ersten Gebermagnetten bzw. das erste Dämpfungsteil angeordnet und deren bzw. dessen Position mittels der Spulenanordnung (2) bzw. der Magnetfeldsensoranordnung separat erfassbar ist.

3. Bedienvorrichtung nach Anspruche 2, deren Geberanordnung (4) zumindest zwei voneinander unabhängige Geberelemente (5, 6) aufweist, deren Drehwinkelpositionen separat erfassbar sind, so dass aus den separat erfassten Drehwinkelpositionen der einzelnen Geberelemente (5, 6) der Drehwinkel der Geberanordnung (4) ermittelbar ist.

4. Bedienvorrichtung nach einem der Ansprüche 1 bis 3, deren Geberelement (1) bzw. Geberelemente (5, 6) als Geberspule bzw. Geberspulen, Gebermagnet bzw. Gebermagnete oder magnetisches Dämpfungsteil bzw. magnetische Dämpfungsteile und deren Empfangsanordnung (2) als Spulenanordnung bzw. Magnetfeldsensoranordnung ausgebildet ist bzw. sind.

5. Bedienvorrichtung nach einem der Ansprüche 1 bis 4, bei der die Geberanordnung (1, 4) an einem Endabschnitt (3) eines Verstellhebels (7) angeordnet ist.

## Claims

1. An operating device with a transmitter assembly (1) and a receiver assembly (2) to which the transmitter assembly (1) is longitudinally, transversely and vertically movable and by means of which different signals can be generated depending on the respective position of the transmitter assembly (1), **characterized in that** the transmitter assembly (1) is rotatable in respect of the receiver assembly (2) and is configured such that by means thereof at different rotational angles different signals assigned to the respective rotational angle can be generated in the receiver assembly (2) and that the transmitter element forming the transmitter assembly (1) can be configured as a non-midpoint-symmetrical, i.e. as an elongated oval, transmitter coil (1), the longitudinal dimension whereof is such that it overlaps at least two receiver coils of the receiving coil assembly (2).

2. The operating device with a transmitter assembly (4) and a receiver assembly (2) to which the transmitter assembly (4) is longitudinally, transversely and vertically movable and by means of which different signals can be generated depending on the respective position of the transmitter assembly (4), **characterized in that** the transmitter assembly (4) is rotatable in respect of the receiver assembly (2) and is configured such that by means thereof at different rotational angles different signals assigned to the respective rotational angle can be generated in the receiver assembly (2) and that the transmitter assembly (4) exhibits a first transmitter coil (5), a first transmitter magnet or a first damping part which is centrally arranged on the adjusting lever (7) and by means of which the position of the transmitter assembly (4) can be detected and a second transmitter coil (6), a second transmitter magnet or a second damping part which is displaced in relation to the first transmitter coil (5), the first transmitter magnet or the first damping part and the position of which can be separately detected by means of the coil assembly (2) or the magnetic field sensor assembly.

3. The operating device according to claim 2, the transmitter assembly (4) whereof has at least two transmitter elements (5, 6) independent of one another, the rotational angle positions whereof can be separately detected, so that the rotational angle of the transmitter assembly (4) can be determined from the separately detected rotational angle positions of the individual transmitter elements (5, 6).

4. The operating device according to one of claims 1 to 3, the transmitter element (1) or transmitter elements (5, 6) whereof is or are configured as a transmitter coil or transmitter coils, a transmitter magnet or transmitter magnets or a magnetic damping part or magnetic damping parts and the receiver assembly (2) thereof as a coil assembly or magnetic field sensor assembly.

5. The operating device according to one of claims 1 to 4, wherein the transmitter assembly (1, 4) is arranged on an end portion (3) of an adjusting lever (7).

## Revendications

1. Dispositif de commande avec un ensemble émetteur (1) et un ensemble récepteur (2) par rapport auquel l'ensemble émetteur (1) peut être déplacé longitudinalement, transversalement et verticalement et à l'aide duquel, en fonction de la position respective de l'ensemble émetteur (1), différents signaux peuvent être générés,
**caractérisé en ce que** l'ensemble émetteur (1) est rotatif par rapport à l'ensemble récepteur (2) et est réalisé de manière à ce que grâce à lui, il est possible de générer, selon différents angles de rotation, différents signaux associés à l'angle de rotation respectif dans l'ensemble récepteur (2), et **en ce que** l'élément émetteur formant l'ensemble émetteur (1) est réalisé en tant que bobine émettrice (1) non symétrique par rapport à un point, par exemple allongée et ovale, dont les dimensions en longueur sont étudiées de manière à ce qu'elle se superpose à au moins deux bobines réceptrices de l'ensemble de bobines réceptrices (2).

2. Dispositif de commande avec un ensemble émetteur (4) et un ensemble récepteur (2) par rapport auquel l'ensemble émetteur (4) peut être déplacé longitudinalement, transversalement et verticalement et à l'aide duquel, en fonction de la position respective de l'ensemble émetteur (4), différents signaux peuvent être générés,
**caractérisé en ce que** l'ensemble émetteur (4) est rotatif par rapport à l'ensemble récepteur (2) et est réalisé de manière à ce que grâce à lui, il est possible de générer, selon différents angles de rotation, différents signaux associés à l'angle de rotation respectif dans l'ensemble récepteur (2), et **en ce que** l'ensemble émetteur (4) présente une première bobine émettrice (5), un premier aimant émetteur ou une première partie d'atténuation, laquelle ou lequel est disposé(e) de manière centrale sur le levier de réglage (7) et à l'aide de laquelle ou duquel la position de l'ensemble émetteur (4) peut être détectée, et une deuxième bobine émettrice (6), un deuxième aimant émetteur ou une deuxième partie d'atténuation laquelle ou lequel est décalé(e) par rapport à la première bobine émettrice (5), au premier aimant émetteur ou à la première partie d'atténuation et dont la position peut être détectée séparément au moyen de l'ensemble de bobines (2) ou de l'ensemble de capteurs de champ magnétique.

3. Dispositif de commande selon la revendication 2, dont l'ensemble émetteur (4) présente au moins deux éléments émetteurs (5, 6) indépendants l'un de l'autre dont les positions d'angle de rotation peuvent être détectées séparément de sorte qu'il est possible de déterminer, à partir des positions d'angle de rotation détectées séparément des éléments émetteurs (5, 6) individuels, l'angle de rotation de l'ensemble émetteur (4).

4. Dispositif de commande selon l'une des revendications 1 à 3, dont l'élément émetteur (1) ou les éléments émetteurs (5, 6) est ou sont réalisé (s) en tant que bobine émettrice ou bobines émettrices, aimant récepteur ou aimants récepteurs ou partie d'atténuation ou parties d'atténuation et dont l'ensemble récepteur (2) est réalisé en tant qu'ensemble de bobines ou ensemble de capteurs de champ magnétique.

5. Dispositif de commande selon l'une des revendications 1 à 4, dans lequel l'ensemble émetteur (1, 4) est disposé à une partie d'extrémité (3) d'un levier de réglage (7).
